# EUROPEAN PATENT APPLICATION

(11) **EP 4 759 538 A1**
(43) Date of publication of application: **17.06.2026**
(21) Application number: 24851687.4
(22) Date of filing: 30.07.2024
(51) Int. Cl.: B32B 27/00, B32B 27/30, B32B 27/40, E04F 13/08, E04F 13/18

(54) **DECORATIVE SHEET**

(30) Priority: 07.08.2023 JP 2023128559
(71) Applicant: Toppan Holdings Inc., Tokyo 110-0016 (JP)
(72) Inventor: MURATA, Daisuke, Tokyo 110-0016 (JP); AKUTSU, Erika, Tokyo 110-0016 (JP)
(74) Representative: TBK
(86) International application number: PCT/JP2024/027210
(87) International publication number: WO 2025/033262

(57) **Abstract**

A decorative sheet with improved heat resistance, scratch resistance, and stain resistance is provided. The decorative sheet (1) includes a primary film layer (2) and a surface protective layer, in which the surface protective layer includes a first gloss-adjustment layer (5) provided on the primary film layer (2) and containing a cured product of a first ionizing radiation-curable resin, and a second gloss-adjustment layer (6) partially covering the upper surface of the first gloss-adjustment layer (5) and containing a cured product of a second ionizing radiation-curable resin, the second gloss-adjustment layer has an upper surface with an uneven structure having a ratio RSm/Ra of a mean width RSm of roughness profile elements to an arithmetic mean roughness Ra that is in the range of 10 or more and 600 or less, and the uneven structure includes a plurality of ridge portions each protruding in a ridge shape.

## Description

### [Technical Field]

The present invention relates to decorative sheets.

### [Background Art]

Decorative materials used for decorating the surface of the interior and exterior of buildings; doors, windows, and fittings; furniture; and the like are generally in the form of decorative panels obtained by attaching a decorative sheet to the surface of a substrate via an adhesive or the like. Decorative sheets are typically provided with a desired pattern, such as a wood grain pattern or a stone pattern. Moreover, decorative sheets that not only two-dimensionally express design patterns, such as wood grain patterns and stone patterns, but also three-dimensionally express rough textures resembling the surface of natural wood materials or stone materials, have also been widely used mainly for applications for which a luxurious feel is desired.

As a method for expressing a three-dimensional texture together with a two-dimensional design pattern on the surface of decorative sheets, various methods have been proposed, and separately used depending on the purpose. For example, there is a method of visually expressing a three-dimensional texture by taking advantage of optical illusions by assigning a surface gloss different from that of the other portions to the portions to be expressed as recesses or protrusions, rather than actually forming irregularities on the surface of the decorative material. This allows an observer to recognize the portions with a relatively high gloss as protrusions and the portions with a relatively low gloss as recesses, even though there are no actual irregularities noticeable to the observer.

In producing such decorative sheets, for example, first, a printed layer with a pattern corresponding to the portions where recesses are to be expressed is formed on one surface of a substrate. Next, a transparent or semi-transparent first gloss-adjustment layer having a low gloss is formed over the entire surface of the substrate on which the print layer has been formed. Then, a transparent or semi-transparent second gloss-adjustment layer having a high gloss is formed over the entire surface of the first gloss-adjustment layer except for the area corresponding to the above-mentioned pattern. Note that, a decorative sheet in which the recess-protrusion relationship is inverted can be obtained by swapping the high and low levels of gloss between the first and second gloss-adjustment layers.

This method can easily impart a three-dimensional texture to any substrate by only preparing two coating materials that give different levels of gloss, without requiring special chemicals or the like. Further, the gloss-adjustment layers having different levels of gloss can be formed by a conventional printing method such as gravure printing, following the formation of the design pattern (patterned ink layer). Therefore, no special equipment is required, the production efficiency is high, and the alignment of a second synthetic coating material layer with the above-mentioned pattern is easy. Since the thickness of the second gloss-adjustment layer can be made much smaller than the height difference of irregularities to be perceived by the observer, use of resins can be reduced, with the advantage of improved flexibility. Thus, a decorative sheet having high suitability for bending can be easily realized.

### [Citation List]

### [Patent Literature]

[PTL 1] WO 2022/182259 A
[PTL 2] JP 2014-188842 A

### [Summary of the Invention]

### [Technical Problem]

An object of the present invention is to provide decorative sheets with improved designability, heat resistance, scratch resistance, and stain resistance.

### [Solution to Problem]

According to an aspect of the present invention, a decorative sheet including a primary film layer and a surface protective layer is provided, in which the surface protective layer includes a first gloss-adjustment layer provided on the primary film layer and containing a cured product of a first ionizing radiation-curable resin, and
a second gloss-adjustment layer partially covering the upper surface of the first gloss-adjustment layer and containing a cured product of a second ionizing radiation-curable resin,
the second gloss-adjustment layer has an upper surface with an uneven structure having a ratio RSm/Ra of a mean width RSm of roughness profile elements to an arithmetic mean roughness Ra that is in the range of 10 or more and 600 or less, and
the uneven structure includes a plurality of ridge portions each protruding in a ridged shape.

According to another aspect of the present invention, the decorative sheet according to the previous aspect is provided, in which the cured product of the first ionizing radiation-curable resin contains one or more bonds selected from the group consisting of a urethane bond, a carbonate bond, and an amide bond.

According to yet another aspect of the present invention, the decorative sheet according to any one of the above aspects is provided, in which the first gloss-adjustment layer further contains a cured product of a thermosetting resin.

According to yet another aspect of the present invention, the decorative sheet according to the previous aspect is provided, in which the proportion of the solid content of the thermosetting resin relative to the total solid content of the first ionizing radiation-curable resin and the thermosetting resin is 90% by mass or less.

According to yet another aspect of the present invention, the decorative sheet according to any one of the above aspects is provided, in which the cured product of the thermosetting resin contains one or more bonds selected from the group consisting of a urethane bond, a carbonate bond, and an amide bond.

According to yet another aspect of the present invention, the decorative sheet according to any one of the above aspects is provided, in which the thermosetting resin contains one or more of an aqueous urethane dispersion, an aqueous epoxy dispersion, and an aqueous polyamine dispersion.

According to yet another aspect of the present invention, the decorative sheet according to any one of the above aspects is provided, in which the first ionizing radiation-curable resin is an aqueous dispersion or emulsion containing at least one of a urethane acrylate and a polyurethane resin, the thermosetting resin is an aqueous dispersion containing a polyurethane resin, and the polyurethane resin in the thermosetting resin contains a reaction product of a polyisocyanate and a polyol, the polyol containing at least one of a polyester polyol and a polycarbonate polyol.

According to yet another aspect of the present invention, the decorative sheet according to any one of the above aspects is provided, in which the first and second gloss-adjustment layers each have a thickness in the range of 2 µm or more and 20 µm or less.

According to yet another aspect of the present invention, the decorative sheet according to any one of the above aspects is provided, in which the second ionizing radiation-curable resin contains a di- or higher functional acrylate having a repeating structure.

According to yet another aspect of the present invention, the decorative sheet according to the previous aspect is provided, in which the number of repeat units of the repeating structure is 3 or more.

According to yet another aspect of the present invention, the decorative sheet according to any one of the above aspects is provided, in which the second gloss-adjustment layer further contains particles with a mean particle size of 10 µm or less.

According to yet another aspect of the present invention, the decorative sheet according to the previous aspect is provided, in which the mass of the particles contained in the second ionizing radiation-curable resin is in the range of 0.5 parts by mass or more and 10 parts by mass or less of the particles, relative to 100 parts by mass of the second ionizing radiation-curable resin.

According to yet another aspect of the present invention, a decorative material is provided. The decorative material includes the decorative sheet according to any one of the above aspects, and a substrate having the decorative sheet attached thereto.

According to yet another aspect of the present invention, a decorative sheet manufacturing method is provided that includes: forming, on a primary film layer, a first gloss-adjustment layer containing a cured product of a first ionizing radiation-curable resin; and forming a second gloss-adjustment layer partially covering the upper surface of the first gloss-adjustment layer and containing a cured product of a second ionizing radiation-curable resin, the second gloss-adjustment layer having an upper surface with an uneven structure having a ratio RSm/Ra of a mean width RSm of roughness profile elements to an arithmetic mean roughness Ra that is in the range of 10 or more and 600 or less, the uneven structure including a plurality of ridge portions each protruding in a ridge shape.

According to yet another aspect of the present invention, the decorative sheet manufacturing method according to the previous aspect is provided, in which the first gloss-adjustment layer further contains a cured product of a thermosetting resin.

According to yet another aspect of the present invention, the decorative sheet manufacturing method according to the previous aspect is provided, in which the first ionizing radiation-curable resin is an aqueous dispersion or emulsion containing at least one of a urethane acrylate and a polyurethane resin, the thermosetting resin is an aqueous dispersion containing a polyurethane resin, and the polyurethane resin in the thermosetting resin contains a reaction product of a polyisocyanate and a polyol, the polyol containing at least one of a polyester polyol and a polycarbonate polyol.

### [Advantageous Effects of the Invention]

According to the present invention, a decorative sheet with improved designability, heat resistance, scratch resistance, and stain resistance is provided.

### [Brief Description of the Drawings]

Fig. 1 is a cross-sectional view of a decorative material including a decorative sheet according to an embodiment of the present invention.
Fig. 2 is a cross-sectional view of a second gloss-adjustment layer of the decorative sheet of Fig. 1.
Fig. 3 is a micrograph of the second gloss-adjustment layer of a decorative sheet according to an example of the present invention.
Fig. 4 is an enlarged cross-sectional view showing part of the second gloss-adjustment layer shown in Fig. 2.

### [Description of the Embodiments]

With reference to the drawings, some embodiments of the present invention will be described. The embodiments described below are more specific examples of any of the aspects described above. The matters described below can be incorporated alone or in combination into each of the above aspects.

The embodiments described below are merely example configurations for embodying the technical idea of the present invention, and the technical idea of the present invention should not limit the materials, shapes, structures, and the like of the components to those described below. The technical idea of the present invention can undergo various modifications within the technical scope defined by the disclosed claims.

It should be noted that components having the same or similar functions are denoted by the same reference signs in the drawings referred to below, and redundant description is omitted. In addition, the drawings are schematic, and the relationship between dimensions in one direction and another direction, dimensions of a member and another member, and the like may be different from actual ones.

### <1> Decorative material and decorative sheet

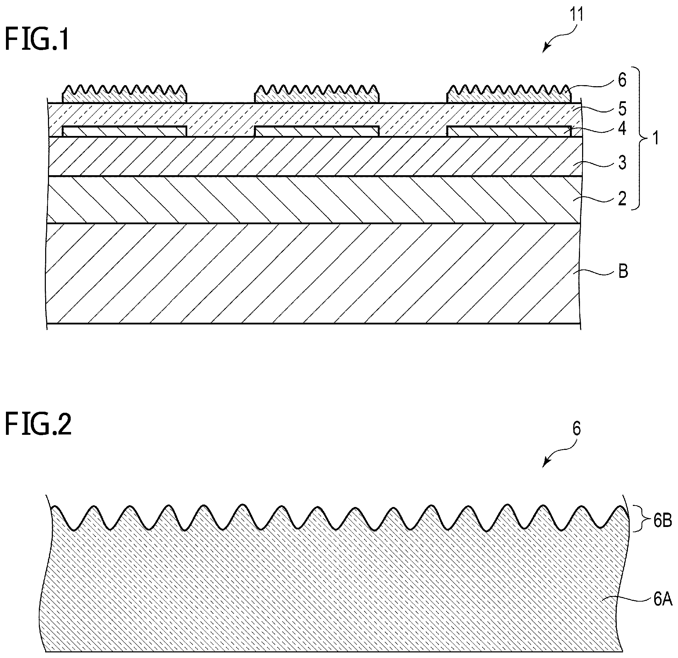

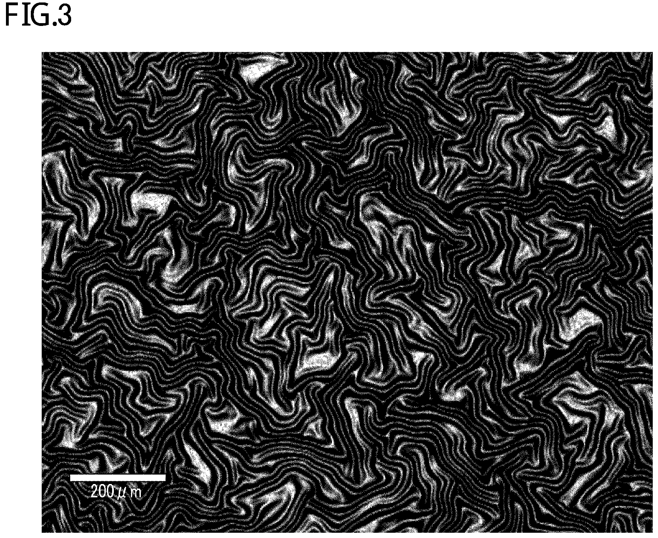

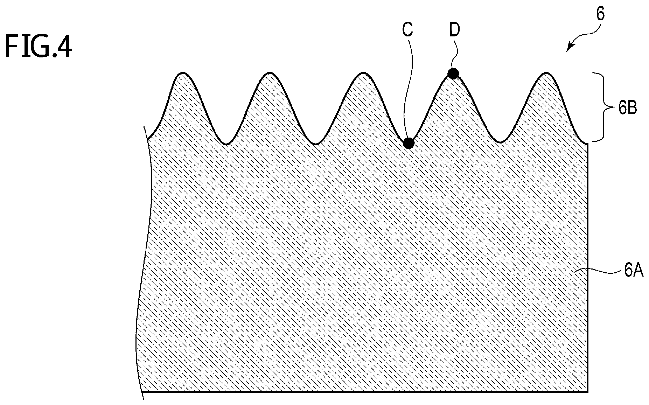

Fig. 1 is a cross-sectional view of a decorative material including a decorative sheet according to an embodiment of the present invention. Fig. 2 is a cross-sectional view of a second gloss-adjustment layer of the decorative sheet of Fig. 1. Fig. 3 is a micrograph of the second gloss-adjustment layer of a decorative sheet according to an example of the present invention. Fig. 4 is an enlarged cross-sectional view showing part of the second gloss-adjustment layer shown in Fig. 2.

Note that the cross sections shown in Figs. 2 and 4 are taken along the thickness direction of the second gloss-adjustment layer. The micrograph in Fig. 3 is a plan view photograph taken with a laser microscope (OLS-4000, manufactured by Olympus Corporation).

A decorative material 11 shown in Fig. 1 includes a substrate B and a decorative sheet 1 attached thereto. Here, the decorative material 11 is a decorative panel. The decorative panel may be flat, bent, or folded. The decorative material 11 may have a shape other than a plate.

The substrate B is a board material. The board material is, for example, a wood board, an inorganic board, a metal plate, or a composite board made of multiple materials. The substrate B may have a shape other than a plate.

The decorative sheet 1 includes a primary film layer 2, a solid ink layer 3, a patterned ink layer 4, a first gloss-adjustment layer 5, and a second gloss-adjustment layer 6. The solid ink layer 3, the patterned ink layer 4, and the first and second gloss-adjustment layers 5 and 6 are provided on the surface of the primary film layer 2 opposite to the surface facing the substrate B, in this order from the primary film layer 2. Either or both of the solid ink layer 3 and the patterned ink layer 4 may be omitted. One or more other layers such as a transparent resin layer may be provided between the patterned ink layer 4 and the first gloss-adjustment layer 5.

Components of the decorative sheet 1 will be explained below in order.

### <1. 1> Primary film layer

The primary film layer 2 or an material thereof may be selected from paper, such as tissue paper, resin-mixed paper, titanium paper, resin-impregnated paper, flame-resistant paper, and inorganic paper; woven or non-woven fabrics made of natural fibers or synthetic fibers; synthetic resin-based substrates that contain synthetic resins including polyolefin resins such as homo- or random polypropylene resins and polyethylene resin, copolymerized polyester resins, amorphous-state crystalline polyester resins, polyethylene naphthalate resins, polybutylene resins, acrylic resins, polyamide resins, polycarbonate resins, polyvinyl chloride resins, polyvinylidene chloride resins, and fluororesins; wooden substrates, such as wood veneers, sliced veneers, plywood, laminate wood, particle boards, and medium density fiberboards; inorganic substrates, such as gypsum boards, cement boards, calcium silicate boards, and ceramic panels; metal-based substrates of metals such as iron, copper, aluminum, and stainless steel; or composite materials or laminates thereof. The primary film layer 2 may have various forms such as a film, a sheet, a plate, and a profile-extruded member.

### <1. 2> Solid Ink Layer

The solid ink layer 3 is a continuous film formed by entirely covering one surface of the primary film layer 2 with ink. The solid ink layer 3 may serve as a concealing layer that conceals the substrate B or the primary film layer 2. The solid ink layer 3 may also serve as a planarizing layer. The solid ink layer 3 may have a single-layer structure or a multilayer structure.

The solid ink layer 3 can be formed by, for example, using a printing ink (or a coating agent) in which a matrix and a coloring agent, such as dye or pigment, are dissolved or dispersed in a solvent.

Examples of the matrix include various synthetic resins, such as oil-based nitrocellulose resin, two-component urethane resin, acrylic resin, styrene-based resin, polyester-based resin, urethane-based resin, polyvinyl-based resin, alkyd resin, epoxy-based resin, melamine-based resin, fluororesin, silicone-based resin, and rubber-based resin; and mixtures and copolymers thereof.

Examples of the coloring agent include inorganic pigments, such as carbon black, titanium white, zinc white, rouge, chrome yellow, Prussian blue, and cadmium red; organic pigments, such as azo pigments, lake pigments, anthraquinone pigments, phthalocyanine pigments, isoindolinone pigments, and dioxazine pigments; and mixtures thereof.

Examples of the solvent include toluene, xylene, ethyl acetate, butyl acetate, methyl alcohol, ethyl alcohol, isopropyl alcohol, acetone, methyl ethyl ketone, methyl isobutyl ketone, cyclohexanone, water, and mixtures thereof.

In order to impart various functions, functional additives such as an extender pigment, a plasticizer, a dispersant, a surfactant, a tackifier, an adhesion promoter, a desiccant, a curing agent, a curing accelerator, and a curing retarder may be added to the ink.

### <1. 3> Patterned ink layer

The patterned ink layer 4 is provided to impart a design pattern to the decorative sheet 1. The design pattern is, for example, of wood grain, stone, sand, tile, brick, fabric, grained leather, or a geometric figure. In the example of Fig. 1, the patterned ink layer 4 is a printed pattern that partially covers the upper surface of the solid ink layer 3. This printed pattern is provided directly beneath the second gloss-adjustment layer. In other words, the second gloss-adjustment layer 6 is provided so as to overlap the patterned ink layer 4. That is, the printed pattern included in the patterned ink layer 4 and the pattern of the second gloss-adjustment layer 6 are identical in shape and position when orthogonally projected onto a plane perpendicular to the thickness direction. Note that, in the following, being identical in shape and position when orthogonally projected onto a plane perpendicular to the thickness direction may be simply referred to as "identical in shape and position".

The patterned ink layer 4 can be formed by, for example, using the ink described above regarding the solid ink layer 3. The patterned ink layer 4 is formed using any number of printing plates necessary for expression of the desired design. In other words, the patterned ink layer 4 may be a layer with one printed pattern formed with a single ink, or may be a layer consisting of a plurality of printed patterns formed with different inks. In the latter case, one printed pattern may be identical in shape and position to the pattern of the second gloss-adjustment layer 6, or a combination of two or more printed patterns may be identical in shape and position to the pattern of the second gloss-adjustment layer 6. For example, one printed pattern or a combination of two or more printed patterns may be identical in shape and position to the pattern of the second gloss-adjustment layer 6, and the remaining printed patterns may be located in areas corresponding to openings of the second gloss-adjustment layer 6.

When the patterned ink layer 4 has only one printed pattern, this printed pattern has a different color from the solid ink layer 3. When the patterned ink layer 4 has a plurality of printed patterns and the combination of these printed patterns is identical in shape and position to the pattern of the second gloss-adjustment layer 6, one or more of these printed patterns, for example all of these printed patterns, have a different color from the solid ink layer 3. When the patterned ink layer 4 has a plurality of printed patterns, one printed pattern or a combination of two or more printed patterns is identical in shape and position to the pattern of the second gloss-adjustment layer 6, and the remaining printed patterns are located in areas corresponding to openings of the second gloss-adjustment layer 6, one or more of the former printed patterns have a different color from the solid ink layer 3 and one or more of the latter printed patterns. For example, all of the former printed patterns may have a different color from the solid ink layer 3 and all of the latter printed patterns.

Here, as an example, it is assumed that the patterned ink layer 4 is a layer with one printed pattern made of a single ink, and has a different color from the solid ink layer 3.

### <1. 4> Transparent Resin Layer

As described above, the decorative sheet 1 can further include a transparent resin layer between the patterned ink layer 4 and the first gloss-adjustment layer 5. The transparent resin layer may contribute to improving the wear resistance of the decorative sheet 1.

For example, a resin composition containing an olefin-based resin as a main component is preferably used for the transparent resin layer. The olefin-based resin may be, for example, polypropylene, polyethylene, or polybutene. The olefin-based resin may be a homopolymer or copolymer of two or more α-olefins such as propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. The olefin-based resin may be a copolymer of ethylene or an α-olefin with another monomer, such as an ethylene-vinyl acetate copolymer, an ethylene-vinyl alcohol copolymer, an ethylene-methyl methacrylate copolymer, an ethylene-ethyl methacrylate copolymer, an ethylene-butyl methacrylate copolymer, an ethylene-methyl acrylate copolymer, an ethylene-ethyl acrylate copolymer, or an ethylene-butyl acrylate copolymer. In particular, in order to further improve surface strength, highly crystalline polypropylene is preferably used.

The transparent resin layer may contain additives, such as a heat stabilizer, an ultraviolet absorber, a photostabilizer, an antiblocking agent, a catalyst scavenger, and a coloring agent. These additives may be suitably selected from known additives. The transparent resin layer can be formed by various lamination methods such as a method using thermal pressure, extrusion lamination, and dry lamination.

### <1. 5> First Gloss-adjustment Layer

The first gloss-adjustment layer 5 is provided on the primary film layer 2. Here, the first gloss-adjustment layer 5 covers the solid ink layer 3 and the patterned ink layer 4.

The first gloss-adjustment layer 5 is made of a cured resin. The first gloss-adjustment layer 5 may further contain particles. For example, particles described later in connection with the second gloss-adjustment layer 6 may be used as the particles. Based on 100 parts by mass of the first gloss-adjustment layer 5, preferably 60 parts by mass or more, more preferably 70 parts by mass or more, and even more preferably 80 parts by mass or more of cured resin is contained in the first gloss-adjustment layer 5.

The first gloss-adjustment layer 5 contains a cured product of a first ionizing radiation-curable resin as the cured resin. Here, "ionizing radiation" refers to a charged particle beam such as an electron beam. The first ionizing radiation-curable resin is cured by exposure to ionizing radiation. The first ionizing radiation-curable resin can also be cured by exposure to ultraviolet light.

The first ionizing radiation-curable resin can be a known resin selected from various monomers, commercially available oligomers, and the like. For example, (meth)acrylic resin, silicone resin, polyester resin, urethane resin, amide resin, or epoxy resin can be used. The first ionizing radiation-curable resin may be either an aqueous resin or non-aqueous (organic solvent-based) resin. The first ionizing radiation-curable resin may be solvent-free.

According to one example, the first ionizing radiation-curable resin is an aqueous dispersion or emulsion containing at least one of a urethane acrylate and a polyurethane resin. For example, the dispersion or emulsion contains a resin having an acryloyl group.

The cured product of the first ionizing radiation-curable resin preferably contains one or more bonds selected from the group consisting of a urethane bond, a carbonate bond, and an amide bond.

The first gloss-adjustment layer 5 may further contain a cured product of a thermosetting resin as the cured resin.

According to one example, the thermosetting resin contains one or more of an aqueous urethane dispersion, an aqueous epoxy dispersion, and an aqueous polyamine dispersion. For example, the aqueous dispersion contains a carboxylic acid derivative having a polycarbonate skeleton.

When the thermosetting resin is an aqueous dispersion containing a polyurethane resin, the polyurethane resin may contain a reaction product of a polyisocyanate and a polyol, the polyol containing at least one of a polyester polyol and a polycarbonate polyol. This polyurethane resin may or may not have a silanol group.

The cured product of the thermosetting resin preferably has one or more bonds selected from the group consisting of a urethane bond, an ethylene bond, a carbonate bond, and an amide bond.

When an aqueous dispersion or emulsion is used as at least one of the first ionizing radiation-curable resin and the thermosetting resin, traces of surfactant may remain in the first gloss-adjustment layer 5.

The cured product of the first ionizing radiation-curable resin tends to have a higher melting point or softening point than the cured product of the thermosetting resin. In other words, the cured product of the first ionizing radiation-curable resin contributes more to heat resistance than the cured product of the thermosetting resin. Furthermore, the cured product of the first ionizing radiation-curable resin has enough crosslink density to contribute to achieving high scratch resistance.

However, the cured product of the thermosetting resin tends to have a higher crosslink density than the cured product of the first ionizing radiation-curable resin. In other words, the cured product of the thermosetting resin contributes more to scratch resistance than the cured product of the first ionizing radiation-curable resin.

Therefore, when the first gloss-adjustment layer 5 contains a cured product of the first ionizing radiation-curable resin and a cured product of the thermosetting resin, higher scratch resistance can be achieved compared to when the first gloss-adjustment layer 5 contains only a cured product of the first ionizing radiation-curable resin as the cured resin.

The proportion of the solid content of the thermosetting resin relative to the total solid content of the first ionizing radiation-curable resin and the thermosetting resin is preferably 10% by mass or more, and more preferably 20% by mass or more. Higher scratch resistance can be achieved by increasing this proportion.

The proportion of the solid content of the thermosetting resin relative to the total solid content of the first ionizing radiation-curable resin and the thermosetting resin is preferably 90% by mass or less, and more preferably 80% by mass or less. The heat resistance may decrease when this proportion is too high.

The thickness of the first gloss-adjustment layer 5 is preferably in the range of 2 µm or more and 20 µm or less, more preferably in the range of 2 µm or more and 15 µm or less, and further preferably in the range of 3 µm or more and 10 µm or less. The scratch resistance decreases when the thickness of the first gloss-adjustment layer 5 is increased. When the thickness of the first gloss-adjustment layer 5 is increased, the processability of the decorative sheet 1 decreases, and the decorative sheet 1 becomes more susceptible to whitening when folded.

The first gloss-adjustment layer 5 preferably has a higher specular gloss GS (60°) than the second gloss-adjustment layer 6. The specular gloss GS (60°) of the first gloss-adjustment layer 5 is preferably 3 or more, more preferably 5 or more, and even more preferably 7 or more. In one example, the specular gloss GS (60°) of the first gloss-adjustment layer 5 is 30 or lower. The "specular gloss GS (60°)" is a specular gloss measured at an incidence angle of 60° using a glossmeter conforming to ISO 2813. Although specular gloss GS (60°) is sometimes expressed by adding "%" after the numerical value, "%" is omitted here.

### <1. 6> Second Gloss-adjustment Layer

The second gloss-adjustment layer 6 partially covers the upper surface of the first gloss-adjustment layer 5. Together with the first gloss-adjustment layer 5, the second gloss-adjustment layer 6 forms a surface protective layer.

The second gloss-adjustment layer 6 faces the patterned ink layer 4 with the first gloss-adjustment layer 5 sandwiched therebetween. The second gloss-adjustment layer 6 is identical in shape and position to the patterned ink layer 4.

In this embodiment, the second gloss-adjustment layer 6 is completely identical in shape and position to the patterned ink layer 4. However, other configurations can also be adopted. For example, the orthogonal projection of the patterned ink layer 4 onto a plane perpendicular to the thickness direction may be at least partially spaced from and located inside the contour of the orthogonal projection of the second gloss-adjustment layer 6 onto the plane.

Here, the patterned ink layer 4 is made of a single printed pattern; however, if the patterned ink layer 4 consists of a plurality of printed patterns of different colors, the second gloss-adjustment layer 6 may be identical in shape and position to a combination of these printed patterns. Alternatively, in such case, the second gloss-adjustment layer 6 may be identical in shape and position to one or a combination of two or more of these printed patterns, and the remaining printed patterns may be provided at positions where they do not directly face the second gloss-adjustment layer 6.

Preferably 50% or more, more preferably 70% or more, and even more preferably 90% or more of the area of the orthogonal projection of the second gloss-adjustment layer 6 onto a plane perpendicular to the thickness direction overlaps the orthogonal projection of one printed pattern or a combination of two or more printed patterns that is identical in shape and position to the second gloss-adjustment layer 6 onto the same plane.

The surface of the second gloss-adjustment layer 6 is provided with an uneven structure. The uneven structure provided on the upper surface of the second gloss-adjustment layer 6 has a ratio RSm/Ra of a mean width RSm of roughness profile elements to an arithmetic mean roughness Ra that is in the range of 10 or more and 600 or less. The ratio RSm/Ra is preferably in the range of 10 or more and 500 or less, and more preferably in the range of 50 or more and 450 or less. When the ratio RSm/Ra is decreased, the pitch of the protrusions decreases. This makes it difficult to wipe off stains on the surface of the decorative sheet 1 and therefore reduces its stain resistance. When the ratio RSm/Ra is increased, the pitch of the protrusions increases. This reduces the effect of the uneven structure to reduce the specular gloss GS (60°) of the second gloss-adjustment layer 6.

The ratio RSm/Ra is more preferably 80 or more. When the ratio RSm/Ra is increased, the pitch of the protrusions increases. This improves the affinity of the upper surface of the second gloss-adjustment layer 6 for water or a cleaning agent (water that contains a surfactant or alcohol). If the decorative sheet 1 has a second gloss-adjustment layer 6 with such surface properties, stains can be easily wiped off with water or a cleaning agent even if its surface is stained.

The ratio RSm/Ra is most preferably 100 or more. If the ratio RSm/Ra is within this range, a commercially available cleaning sponge can reach the boundaries of the protrusions on the upper surface of the second gloss-adjustment layer 6 and the areas near the boundaries. Therefore, even if the surface of the decorative sheet 1 is stained, the stains can be easily wiped off using a commercially available cleaning sponge.

Here, the arithmetic mean roughness Ra and the mean width RSm of the roughness profile elements are values measured using a line roughness gauge (according to JIS B 0601: 2013).

The arithmetic mean roughness Ra is preferably in the range of 0.2 µm or more and 10.0 µm or less, more preferably in the range of 0.5 µm or more and 5.0 µm or less, and further preferably in the range of 0.8 µm or more and 4.0 µm or less.

The mean width RSm of the roughness profile elements is preferably in the range of 50 µm or more and 800 µm or less, more preferably in the range of 80 µm or more and 600 µm or less, and even more preferably in the range of 100 µm or more and 500 µm or less.

The uneven structure on the upper surface of the second gloss-adjustment layer 6 serves to make the specular gloss GS (60°) of the second gloss-adjustment layer 6 lower compared to that of the first gloss-adjustment layer 5. The specular gloss GS (60°) of the second gloss-adjustment layer 6 is preferably 10 or less, more preferably 7 or less, and even more preferably 5 or less. In one example, the specular gloss GS (60°) of the second gloss-adjustment layer 6 is 0.5 or more.

The difference in specular gloss GS (60°) between the first and second gloss-adjustment layers 5 and 6 is preferably 1 or more, more preferably 3 or more, and even more preferably 5 or more. According to one example, this difference is 20 or lower.

As described above, the surface of the second gloss-adjustment layer 6 is provided with an uneven structure. Here, the surface of the second gloss-adjustment layer 6 is provided with an uneven structure including a plurality of ridge portions each protruding in a ridge shape. In other words, as shown in Figs. 2 and 4, the second gloss-adjustment layer 6 includes a core portion 6A that is a thin layer having a flat upper surface, and a plurality of ridge portions 6B each protruding in a ridge shape from the upper surface of the core portion 6A.

Here, in the present disclosure, the ridge portions 6B refer to, for example, the portions from the lowest part to the tip of the protrusions provided on the surface of the second gloss-adjustment layer 6, and the core portion 6A refers to the portion of the second gloss-adjustment layer 6 excluding the ridge portions 6B. The term "ridge" refers to a linearly extending raised feature in plan view.

The ridge portions 6B may be curved or straight in plan view. However, as shown by the example in Fig. 3, they are preferred to be curved from the perspective of fingerprint resistance of the surface of the decorative sheet 1. Note that the second gloss-adjustment layer 6 having the ridge portions 6B can be formed, for example, as described below, by irradiating the surface of a coating film containing the second ionizing radiation-curable resin with light of a specific wavelength to cause the cured film formed on the surface of the coating film to expand in an in-plane direction.

The upper surface of the second gloss-adjustment layer 6 may have a sinusoidal shape in a cross section parallel to the thickness direction and the direction in which the ridge portions 6B are arranged. The sinusoidal shape herein refers to a shape, as shown in Fig. 4, in which the line from the lowest point C of the ridge portions 6B to the highest point D (apex) can be expressed as a sine wave.

The uneven structure of the second gloss-adjustment layer 6 preferably has a reduced peak height Rpk of 0.5 µm or more and less than 3.5 µm. Here, "reduced peak height Rpk" is a surface texture parameter defined in JIS B 0671-2:2002. The reduced peak height Rpk is more preferably 3.0 µm or less, and further preferably 2.8 µm or less. In addition, the reduced peak height Rpk is more preferably 0.8 µm or more, and further preferably 1.0 µm or more. When the reduced peak height Rpk is within this range, a decorative sheet with a uniform surface condition can be easily obtained.

The thickness of the second gloss-adjustment layer 6 is preferably in the range of 2 µm or more and 20 µm or less, more preferably in the range of 2 µm or more and 15 µm or less, and further preferably in the range of 3 µm or more and 12 µm or less. When the thickness of the second gloss-adjustment layer 6 is small, it is difficult to realize the surface properties described above referring to the ratio RSm/Ra and the like by the method described below. When the thickness of the second gloss-adjustment layer 6 is increased, the processability of the decorative sheet 1 decreases, and the decorative sheet 1 becomes more susceptible to whitening when folded.

The thickness of the second gloss-adjustment layer 6 is the thickness of a layer that has the same apparent area and volume as the second gloss-adjustment layer 6 and has a flat surface. The thickness of the second gloss-adjustment layer 6 is determined, for example, as follows. First, a cross section that is parallel to the thickness direction of the second gloss-adjustment layer 6 and perpendicular to the length direction of the ridge portions 6B is imaged. Next, from this cross-sectional image, the dimension of the second gloss-adjustment layer 6 in the width direction of the ridge portions 6B, and the area of the cross section of the second gloss-adjustment layer 6 are obtained. The thickness of the second gloss-adjustment layer 6 is a value obtained by dividing this area by the dimension. If the coating liquid for the second gloss-adjustment layer, which will be described later, does not contain a solvent, the thickness of the coating film made of this coating liquid is equal to the thickness of the second gloss-adjustment layer 6.

The thickness of the second gloss-adjustment layer 6 is preferably set so that the ratio between the thickness (or height) of the ridge portions 6B and the thickness of the core portion 6A (thickness of ridge portions 6B / thickness of core portion 6A) is in the range of 0.01 or more and 2.0 or less, and more preferably set so that the ratio is in the range of 0.1 or more and 1.0 or less.

The second gloss-adjustment layer 6 contains a cured resin. As described below, the second gloss-adjustment layer 6 may further contain particles. Relative to 100 parts by mass of the second gloss-adjustment layer 6, preferably 60 parts by mass or more, more preferably 70 parts by mass or more, and even more preferably 80 parts by mass or more of cured resin is contained in the second gloss-adjustment layer 6.

The second gloss-adjustment layer 6 contains a cured product of a second ionizing radiation-curable resin as the cured resin. As described above, ionizing radiation refers to a charged particle beam such as an electron beam. The second ionizing radiation-curable resin is cured by exposure to ionizing radiation. The second ionizing radiation-curable resin can also be cured by exposure to ultraviolet light. The second ionizing radiation-curable resin used here is cured by exposure to light having a wavelength of 200 nm or less, and has a large absorption coefficient for this light.

The second ionizing radiation-curable resin can be a known resin selected from various monomers, commercially available oligomers, and the like. For example, (meth)acrylic resin, silicone resin, polyester resin, urethane resin, amide resin, or epoxy resin can be used. The second ionizing radiation-curable resin may be either an aqueous resin or non-aqueous (organic solvent-based) resin. The second ionizing radiation-curable resin may be solvent-free.

A main component of the second ionizing radiation-curable resin is preferably acrylate. Here, main component refers to it being contained in an amount of 60 parts by mass or more, more preferably 70 parts by mass or more, most preferably 80 parts by mass or more, relative to 100 parts by mass of the forming resin component.

The acrylate is preferably a di- or higher functional acrylate, and more preferably a tri- or higher functional acrylate. To obtain a second gloss-adjustment layer 6 having good scratch resistance, the acrylate is preferably a tri- or higher functional acrylate. Although there is no upper limit to the number of functional groups of the acrylate, it is six or less according to one example.

The acrylate preferably has a repeating structure. This repeating structure is, for example, any one of an ethylene oxide (EO) structure, propylene oxide (PO) structure, and ε-caprolactone (CL) structure. The repeating structure is preferably an ethylene oxide or propylene oxide. In the acrylate, the repeating structure may be located between the acryloyl group and the methylol group when the ring is open.

The repeating structure preferably has three or more repeat units. If an acrylate having a large number of repeat units is used, the cured film tends to expand in the in-plane direction in a second irradiation step described below. As a result, wrinkles corresponding to the ridge portions 6B are more likely to appear on the coating surface. However, if the number of repeat units is large, the crosslink density decreases, and the scratch resistance of the surface protective layer decreases. The number of repeat units is therefore preferably 30 or less and more preferably 20 or less.

The number of repeat units of the repeating structure can be analyzed using MALDI-TOF-MS. The ionizing radiation-curable resin may have a molecular weight distribution. If there is a molecular weight distribution, the number of repeat units is set to the number of repeat units corresponding to the molecular weight having the most intense peak in the MALDI-TOF-MS mass spectrum.

The second gloss-adjustment layer 6 may further contain particles in addition to cured resin.

Examples of the particles contained in the second gloss-adjustment layer 6 include particles of organic materials such as polyethylene (PE) wax, polypropylene (PP) wax, and resin beads, and particles of inorganic materials such as silica, glass, alumina, titania, zirconia, calcium carbonate, and barium sulfate.

A mean particle size (D50) of the particles is preferably 10 µm or less, more preferably in the range of 1 µm or more and 8 µm or less, even more preferably in the range of 2 µm or more and 7 µm or less, and most preferably in the range of 3 µm or more and 6 µm or less. When the mean particle size (D50) of the particles is increased, the particles are more likely to detach from the second gloss-adjustment layer 6, which may make it difficult to achieve high scratch resistance. When small particles are used, the effect of forming the wrinkles uniformly decreases.

Here, the "mean particle size" or "mean particle size (D50)" is a median diameter (D50) measured by a laser diffraction/scattering particle size analyzer. Note that, when the coating liquid for the second gloss-adjustment layer contains particles, the second gloss-adjustment layer 6 obtained from this coating liquid also contains particles. The mean particle size of the particles contained in the second gloss-adjustment layer 6 can be determined by observing a cross section thereof and averaging the particle sizes of a plurality of particles. The value thus obtained is substantially the same as the median diameter (D50) measured by a laser diffraction/scattering particle size analyzer. Therefore, the above range of mean particle size can also be read as the range of mean particle size of the particles contained in the second gloss-adjustment layer.

The amount of particles in the second gloss-adjustment layer 6 is preferably in the range of 0.5 parts by mass or more and 10 parts by mass or less, more preferably in the range of 2 parts by mass or more and 8 parts by mass or less, and most preferably in the range of 2 parts by mass or more and 6 parts by mass or less, relative to 100 parts by mass of the cured resin.

When the added amount of particles is within the above range, the effect of forming wrinkles uniformly is particularly large. When the added amount of particles is too large, the particles are likely to detach from the second gloss-adjustment layer 6, which may make it difficult to achieve high scratch resistance.

### <2> Method for Producing Decorative Sheet

For example, the decorative sheet 1 is manufactured by the following method.

First, the solid ink layer 3 is formed on one surface of the primary film layer 2. This solid ink layer 3 can be formed by various printing methods, such as gravure printing, offset printing, screen printing, electrostatic printing, and inkjet printing, as well as various coating methods, such as roll coating, knife coating, microgravure coating, and die coating.

Next, the patterned ink layer 4 is formed on the solid ink layer 3. The patterned ink layer 4 can be formed by various printing methods, such as gravure printing, offset printing, screen printing, electrostatic printing, and ink-jet printing. Gravure printing is particularly preferred to be used because it allows for relatively high speed printing, and therefore is also advantageous in terms of costs.

Next, a first coating film made of a coating liquid for the first gloss-adjustment layer is formed on the above-mentioned surface of the primary film layer 2 so as to cover the solid ink layer 3 and the patterned ink layer 4. This first coating film can be formed by various printing methods, such as gravure printing, offset printing, screen printing, electrostatic printing, and inkjet printing, as well as various coating methods, such as roll coating, knife coating, microgravure coating, and die coating.

The coating liquid for the first gloss-adjustment layer contains the above-described first ionizing radiation-curable resin. The coating liquid for the first gloss-adjustment layer may further contain one or more other components, for example, the above-described particles, thermosetting resin, solvents, and additives for improving the functionality of the final product, such as an antibacterial agent and an antifungal agent. The coating liquid for the first gloss-adjustment layer may further contain another additive such as an ultraviolet absorber or a photostabilizer. Examples of ultraviolet absorbers include benzotriazole-based ultraviolet absorbers, benzoate-based ultraviolet absorbers, benzophenone-based ultraviolet absorbers, and triazine-based ultraviolet absorbers. Examples of photostabilizers include hindered amine-based photostabilizers.

When the coating liquid for the first gloss-adjustment layer contains a dispersion or emulsion, the first coating film is dried. For example, the first coating film can be dried by heating. This heating is preferably performed at a temperature of 100°C or more and 140°C or less, and more preferably at a temperature of 100°C or more and 120°C or less. When the coating liquid for the first gloss-adjustment layer contains a thermosetting resin, the heating can cure at least a part of the thermosetting resin.

Subsequently, the first irradiation step is carried out. In the first irradiation step, the first coating film is cured by irradiation with first radiation. The first irradiation step may be carried out to completely cure the first coating film, or to incompletely cure the first coating film.

The first radiation is, for example, ionizing radiation. As described above, ionizing radiation refers to a charged particle beam such as an electron beam. The first radiation may be ultraviolet light for which the first ionizing radiation-curable resin has a small absorption coefficient. The wavelength of the ultraviolet light with which the first coating film is irradiated is preferably more than 200 nm, more preferably in the range of 230 nm or more and 450 nm or less, and even more preferably in the range of 250 nm or more and 400 nm or less.

When the first coating film is irradiated with ionizing radiation or the ultraviolet light, the curing can proceed generally uniformly across the entire thickness of the first coating film. Therefore, unlike the second coating film described below, the first coating film has no irregularities on its surface after the first irradiation step.

In one example, the minimum integrated light intensity required to completely cure the first coating film is in the range of 10 mJ/cm² to 1000 mJ/cm². Furthermore, the minimum absorbed dose required to completely cure the first coating film is in the range of 5 kGy or more and 200 kGy or less.

When the coating liquid for the first gloss-adjustment layer contains a thermosetting resin, the first coating film may be heated following the first irradiation step to induce a crosslinking reaction of the thermosetting resin. This heating is preferably performed at a temperature of 80°C or more and 140°C or less, and more preferably at a temperature of 100°C or more and 120°C or less. Note that, even when the coating liquid for the first gloss-adjustment layer contains a thermosetting resin, the first coating film may not be heated immediately after the first irradiation step.

The first irradiation step may be omitted. For example, if the coating liquid for the first gloss-adjustment layer loses its fluidity when dried or heated, the first irradiation step can be omitted.

Next, a second coating film made of a coating liquid for the second gloss-adjustment layer is formed on the first coating film. The second coating film is formed so as to partially cover the upper surface of the first coating film. Specifically, the second coating film is formed so as to face the patterned ink layer 4 with the first coating film interposed therebetween. The second coating film can be formed by various printing methods, such as gravure printing, offset printing, screen printing, electrostatic printing, and inkjet printing. Of these, gravure printing is preferred.

The coating liquid for the second gloss-adjustment layer contains the above-described second ionizing radiation-curable resin. As described above, an example of the second ionizing radiation-curable resin is acrylate.

The coating liquid for the second gloss-adjustment layer may further contain one or more other components, for example, the above-described particles, solvents, and additives for improving the functionality of the final product, such as an antibacterial agent and an antifungal agent. The coating liquid for the second gloss-adjustment layer may further contain another additive such as an ultraviolet absorber or a photostabilizer. Examples of ultraviolet absorbers include benzotriazole-based ultraviolet absorbers, benzoate-based ultraviolet absorbers, benzophenone-based ultraviolet absorbers, and triazine-based ultraviolet absorbers. Examples of photostabilizers include hindered amine-based photostabilizers.

Next, the second and third irradiation steps described below are carried out sequentially.

In the second irradiation step, the second coating film is irradiated with second radiation. The second radiation is light having a wavelength of 200 nm or less.

The second ionizing radiation-curable resin contained in the coating liquid for the second gloss-adjustment layer has a large absorption coefficient for the second radiation. Therefore, the second radiation incident on the second coating film can only reach several tens to several hundreds of nm beneath the outermost surface of the coating film. Accordingly, in the second irradiation step, the crosslinking reaction proceeds in the surface region of the second coating film to form an extremely thin cured film, while in the other regions the crosslinking reaction does not proceed and the other regions remain uncured.

The second coating film after the second irradiation step has wrinkles on its surface corresponding to the ridge portions 6B. The present inventors consider that a reason why wrinkles are formed on the coating surface in the second irradiation step is as follows.

As described above, the second radiation incident on the second coating film can only reach several tens to several hundreds of nm beneath the outermost surface of the coating film. In other words, the crosslinking reaction of the second ionizing radiation-curable resin occurs only on the surface of the second coating film, and the regions that are more than tens to hundreds of nm away from the outermost surface are uncured and contain highly fluid molecules. Such highly fluid molecules cause the cured film to swell and thereby increase the volume of the cured film. The cured film buckles due to the in-plane compressive stress generated by the increase in volume in the in-plane direction, forming wrinkles on the surface of the second coating film.

The second irradiation light can be extracted from excimer vacuum ultra violet (VUV) light. The excimer VUV light can be produced from a noble gas lamp or noble gas halide compound lamp. When a lamp having a noble gas or a noble gas halide compound gas sealed therein is externally provided with high energy electrons, the lamp generates a large amount of discharge plasma (dielectric barrier discharge). This plasma discharge excites atoms of the discharge gas (noble gas) and instantaneously converts them into an excimer state. When the atoms return from the excimer state to the ground state, light having a wavelength in a range specific to that excimer is emitted.

As the gas used for the excimer lamp, any conventionally used gas may be used as long as the gas causes emission of light at 200 nm or less. As the gas, a noble gas such as Xe, Ar, and Kr, or a mixed gas of a noble gas with a halogen gas, such as ArBr and ArF, can be used. The excimer lamp emits light of different wavelengths (center wavelengths) depending on the gas, such as about 172 nm (Xe), about 126 nm (Ar), about 146 nm (Kr), about 165 nm (ArBr), and about 193 nm (ArF).

In consideration of the magnitude of the obtained photon energy and a difference between the wavelength and the bond energy of the organic matter, a xenon lamp emitting excimer light having a center wavelength of 172 nm is preferably used as a light source. Also in consideration of facility maintenance costs, material availability, and the like, a xenon lamp is preferably used as a light source.

The second irradiation step is performed in an atmosphere having a low oxygen concentration. Oxygen has a large absorption coefficient for light of 200 nm or less. Therefore, the second irradiation step is preferably performed, for example, in a nitrogen gas atmosphere. The oxygen concentration in the gas phase in the second irradiation step, that is, the residual oxygen concentration in the reaction atmosphere, is preferably 2000 ppm or less, and more preferably 1000 ppm or less.

The oxygen in the atmosphere inhibits radical polymerization. Therefore, the residual oxygen concentration in the reaction atmosphere affects the formation of wrinkles on the surface of the second coating film. Therefore, when the residual oxygen concentration in the reaction atmosphere is changed, the surface properties of the second gloss-adjustment layer 6 may also change.

The integrated light intensity of the second radiation is preferably in the range of 0.5 mJ/cm² or more and 200 mJ/cm² or less, more preferably in the range of 1 mJ/cm² or more and 100 mJ/cm² or less, even more preferably in the range of 3 mJ/cm² or more and 50 mJ/cm² or less, and most preferably in the range of 5 mJ/cm² or more and 30 mJ/cm² or less. If the integrated light intensity is reduced, the expansion of the cured film in the in-plane direction decreases. If the integrated light intensity is increased, the surface condition of the second coating film deteriorates.

In the third step, the second coating film is irradiated with the third radiation. The third radiation is ionizing radiation, or ultraviolet light having a longer wavelength than the light emitted in the second irradiation step. Light mentioned above for the first radiation can be used as the third radiation.

In the third irradiation step, the crosslinking reaction proceeds in the second coating film across its entire thickness. If the first coating film is not completely cured at the time the third irradiation step is started, the crosslinking reaction may also proceed in the first coating film across its entire thickness.

The integrated light intensity of the third radiation is preferably in the range of 10 mJ/cm² or more and 500 mJ/cm² or less, more preferably in the range of 50 mJ/cm² or more and 400 mJ/cm² or less, and even more preferably in the range of 100 mJ/cm² or more and 300 mJ/cm² or less.

The irradiation with the third radiation is preferably performed so that the absorbed dose is in the range of 5 kGy to 200 kGy, more preferably in the range of 10 kGy to 150 kGy, and even more preferably in the range of 15 kGy to 100 kGy.

If a layer having a sufficient strength cannot be obtained by irradiation with only a single type of radiation, the type of the third radiation may be changed during the third irradiation step. For example, ionizing radiation may be emitted first, and then ultraviolet light having a longer wavelength than the light emitted in the second irradiation step may be emitted. Alternatively, ultraviolet light having a longer wavelength than the light emitted in the second irradiation step may be emitted first, and then ionizing radiation may be emitted. Alternatively, ultraviolet light having a longer wavelength than the light emitted in the second irradiation step may be emitted first, and then ultraviolet light having an even longer wavelength may be emitted.

If the coating liquid for the first gloss-adjustment layer contains a thermosetting resin and the crosslinking reaction of the thermosetting resin has not sufficiently progressed when the second irradiation step is started, the first coating film may be heated between the second and third irradiation steps or after the third irradiation step. This heating can be carried out, for example, under the same conditions as described above for the heating following the first irradiation step.

The decorative sheet 1 is thus obtained. In the decorative sheet 1 obtained by this method, there is no interface between the core portion 6A and the ridge portions 6B, and they are formed integrally.

### <3> Effects

The above-described decorative sheet 1 includes the first gloss-adjustment layer 5 and the second gloss-adjustment layer 6 partially covering the first gloss-adjustment layer 5. The upper surface of the second gloss-adjustment layer 6 has an uneven structure with a small ratio RSm/Ra of the mean width RSm of roughness profile elements to the arithmetic mean roughness Ra. The uneven structure with a small ratio RSm/Ra serves to make the specular gloss GS (60°) of the second gloss-adjustment layer 6 lower than that of the first gloss-adjustment layer 5. Therefore, such a structure can contribute to the expression of a three-dimensional texture.

Further, in the decorative sheet 1, the second gloss-adjustment layer 6 is identical in shape and position to the patterned ink layer 4. Therefore, the decorative sheet 1 can express a three-dimensional texture with the areas corresponding to the patterned ink layer 4 serving as protrusions and the other areas serving as recesses. This allows the decorative sheet 1 to express, for example, a luxurious design that resembles natural wood, natural stone, and the like by appropriately selecting the color of the solid ink layer 3 and the color of the patterned ink layer 4.

Furthermore, the uneven structure on the upper surface of the second gloss-adjustment layer 6 has a sufficiently large ratio RSm/Ra. Since the decorative sheet 1 has a second gloss-adjustment layer 6 with such surface properties, stains can be easily wiped off with water or a cleaning agent even if its surface is stained. In other words, the decorative sheet 1 has good stain resistance.

Furthermore, in the decorative sheet 1, the first gloss-adjustment layer 5 contains a cured product of the first ionizing radiation-curable resin, and the second gloss-adjustment layer 6 contains a cured product of the second ionizing radiation-curable resin. The cured products of the ionizing radiation-curable resins contribute more to heat resistance than the cured product of the thermosetting resin. Furthermore, the cured products of the ionizing radiation-curable resins have enough crosslink density to contribute to achieving high scratch resistance. Therefore, the decorative sheet 1 has good heat resistance and scratch resistance.

The uneven structure including the ridge portions 6B formed on the upper surface of the second gloss-adjustment layer 6 by the above-mentioned method is finer than an uneven structure formed by mechanical processing such as embossing. Since the decorative sheet 1 has a fine uneven structure on the upper surface of the second gloss-adjustment layer 6, it has a matte finish and good fingerprint resistance.

Furthermore, the above-described uneven structure consisting of a plurality of protrusions each protruding in a ridge shape provides more uniformly arranged protrusions, that is, a more uniform surface condition when visually observed, compared to an uneven structure consisting of a plurality of randomly arranged protrusions each having a shape corresponding to a portion of a particle. Therefore, the decorative sheet 1 also has good designability in this respect.

### <4> Modifications

The decorative sheet 1 can be modified in various manners.

For example, the second gloss-adjustment layer 6 may be identical in shape and position to the part of the solid ink layer 3 that is not covered by the patterned ink layer 4. A decorative sheet 1 modified in this manner can express a three-dimensional texture with the areas corresponding to the patterned ink layer 4 serving as recesses and the other areas serving as protrusions.

In the decorative sheet 1 described above, the protrusions provided on the upper surface of the second gloss-adjustment layer 6 are ridge-shaped. These protrusions do not need to be ridge-shaped. For example, each of these protrusions may be a portion of a particle.

In the decorative sheet 1 described above, the area of the upper surface of the first gloss-adjustment layer 5 that is not covered by the second gloss-adjustment layer 6 is flat. This area may be provided with an uneven structure. This uneven structure may be a structure similar to that described above for the ridge portions 6B, or may be a structure in which a plurality of protrusions that are each a portion of a particle are arranged. When an uneven structure is provided in the area of the upper surface of the first gloss-adjustment layer 5 that is not covered by the second gloss-adjustment layer 6, this uneven structure preferably has a ratio RSm/Ra larger than that of the uneven structure provided on the upper surface of the second gloss-adjustment layer 6.

### Examples

The following description discusses examples of the present invention. The "particle size" in the following is the above-mentioned "mean particle size (D50)".

### <Example 1>

The decorative sheet 1 described with reference to Figs. 1 to 4 was produced as follows. First, impregnated paper having a basis weight of 50 g/m² (GFR-506, manufactured by Kohjin Co., Ltd.) was prepared as the primary film layer 2. On one surface of the primary film layer 2, the solid ink layer 3 and the patterned ink layer 4 were formed in this order using oily nitrocellulose resin gravure printing inks (various colors of PCNT (PCRNT) manufactured by Toyo Ink Co., Ltd.). The design pattern of the patterned ink layer 4 was a wood grain pattern.

Next, a coating liquid for the first gloss-adjustment layer having the following composition was applied on the solid ink layer 3 and the patterned ink layer 4. The coating liquid for the first gloss-adjustment layer was applied so that the first gloss-adjustment layer 5 would have a thickness of 5 µm. The first coating film formed by the coating liquid for the first gloss-adjustment layer was dried by heating at 100°C.

### (Coating Liquid for First Gloss-adjustment Layer)

- Ionizing radiation-curable resin
   Type: aqueous UV curable resin
   Product name: SHIKOH (registered trademark) UV-W300 (manufactured by Mitsubishi Chemical Corporation)

Next, a coating liquid for the second gloss-adjustment layer having the following composition was printed on part of the first coating film corresponding to the patterned ink layer 4. The coating liquid for the second gloss-adjustment layer was printed so that the second gloss-adjustment layer 6 would have a thickness of 5 µm.

### (Coating Liquid for Second Gloss-adjustment Layer)

- Ionizing radiation-curable resin
   Type: trimethylolpropane EO-modified triacrylate (6 mol EO added)
   Product name: Miramer M3160 (manufactured by Miwon)
   Blended: 100 parts by mass
- Particles
   Product name: SYLYSIA 250N (manufactured by Fuji Silysia Chemical Ltd.)
   Particle size: 5 µm
   Blended: 0.5 parts by mass

Subsequently, the second irradiation step was carried out. Specifically, under atmospheric pressure and in a nitrogen gas atmosphere with an oxygen concentration of 100 ppm, the surfaces of the first coating film and the second coating film made of the coating liquid for the second gloss-adjustment layer were irradiated with ultraviolet light having a wavelength of 172 nm using a Xe excimer lamp so that the integrated light intensity would be 50 mJ/cm². This created wrinkles on the surface of the second coating film.

Subsequently, the third irradiation step was carried out. Specifically, the first and second coating films were irradiated with 30 kGy of ionizing radiation to entirely and completely cure them and thereby form the first and second gloss-adjustment layers 5 and 6.

The decorative sheet 1 was thus obtained.

### <Example 2>

The decorative sheet 1 described with reference to Figs. 1 to 4 was produced in the same manner as in Example 1, except that the composition of the coating liquid for the first gloss-adjustment layer was changed as follows, and the first coating film was heated to 120°C after the third irradiation step to completely cure it.

### (Coating Liquid for First Gloss-adjustment Layer)

- Ionizing radiation-curable resin
   Type: aqueous UV curable resin
   Product name: SHIKOH (registered trademark) UV-W300 (manufactured by Mitsubishi Chemical Corporation)
   Blended: 80 parts by mass (solid content)
- Thermosetting resin
   Type: aqueous thermosetting resin (polycarbonate-based)
   Product name: Takelac (registered trademark) WS-5100 (manufactured by Mitsui Chemicals, Inc)
   Blended: 20 parts by mass (solid content)

### <Example 3>

The decorative sheet 1 described with reference to Figs. 1 to 4 was produced in the same manner as in Example 2, except that the coating liquid for the first gloss-adjustment layer contained 50 parts by mass of the ionizing radiation-curable resin and 50 parts by mass of the thermosetting resin.

### <Example 4>

The decorative sheet 1 described with reference to Figs. 1 to 4 was produced in the same manner as in Example 2, except that the coating liquid for the first gloss-adjustment layer contained 20 parts by mass of the ionizing radiation-curable resin and 80 parts by mass of the thermosetting resin on a solid content basis.

### <Example 5>

The decorative sheet 1 described with reference to Figs. 1 to 4 was produced in the same manner as in Example 2, except that the coating liquid for the first gloss-adjustment layer contained 10 parts by mass of the ionizing radiation-curable resin and 90 parts by mass of the thermosetting resin on a solid content basis.

### <Example 6>

The decorative sheet 1 described with reference to Figs. 1 to 4 was produced in the same manner as in Example 2, except that the composition of the coating liquid for the first gloss-adjustment layer was changed as follows.

### (Coating Liquid for First Gloss-adjustment Layer)

- Ionizing radiation-curable resin
   Type: aqueous UV curable resin
   Product name: SHIKOH (registered trademark) UV-W300 (manufactured by Mitsubishi Chemical Corporation)
   Blended: 50 parts by mass (solid content)
- Thermosetting resin
   Type: aqueous thermosetting resin (polyester-based)
   Product name: Takelac (registered trademark) WS-4022 (manufactured by Mitsui Chemicals, Inc)
   Blended: 50 parts by mass (solid content)

### <Example 7>

The decorative sheet 1 described with reference to Figs. 1 to 4 was produced in the same manner as in Example 2, except that the composition of the coating liquid for the first gloss-adjustment layer was changed as follows.

### (Coating Liquid for First Gloss-adjustment Layer)

- Ionizing radiation-curable resin
   Type: aqueous UV curable resin
   Product name: UW-9102 (manufactured by UBE Corporation)
   Blended: 50 parts by mass (solid content)
- Thermosetting resin
   Type: aqueous thermosetting resin (polyester-based)
   Product name: Takelac (registered trademark) WS-4022 (manufactured by Mitsui Chemicals, Inc)
   Blended: 50 parts by mass (solid content)

### <Example 8>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows. The coating liquid for the second gloss-adjustment layer was printed so that the second gloss-adjustment layer 6 would have a thickness of 20 µm.

### (Coating Liquid for Second Gloss-adjustment Layer)

- Ionizing radiation-curable resin
   Type: trimethylolpropane EO-modified triacrylate (30 mol EO added)
   Product name: NAM-AT30E (manufactured by Nagase America LLC)
   Blended: 100 parts by mass
- Particles
   Product name: SYLYSIA 250N (manufactured by Fuji Silysia Chemical Ltd.)
   Particle size: 5 µm
   Blended: 0.5 parts by mass

### <Example 9>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis. In addition, the coating liquid for the second gloss-adjustment layer was printed so that the second gloss-adjustment layer 6 would have a thickness of 3 µm.

### <Example 10>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis. In addition, the coating liquid for the first gloss-adjustment layer was printed so that the first gloss-adjustment layer 5 would have a thickness of 1.5 µm.

### <Example 11>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis. In addition, the coating liquid for the first gloss-adjustment layer was printed so that the first gloss-adjustment layer 5 would have a thickness of 22 µm.

### <Example 12>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows.

### (Coating Liquid for Second Gloss-adjustment Layer)

- Ionizing radiation-curable resin
   Type: trimethylolpropane PO-modified triacrylate (6 mol PO added)
   Product name: NAM-TMPT6PO (manufactured by Nagase America LLC)
   Blended: 100 parts by mass
- Particles
   Product name: SYLYSIA 250N (manufactured by Fuji Silysia Chemical Ltd.)
   Particle size: 5 µm
   Blended: 0.5 parts by mass

### <Example 13>

The decorative sheet 1 described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows.

### (Coating Liquid for Second Gloss-adjustment Layer)

- Ionizing radiation-curable resin
   Type: trimethylolpropane EO-modified triacrylate (6 mol EO added)
   Product name: Miramer M3160 (manufactured by Miwon)
   Blended: 100 parts by mass
- Particles
   Product name: SYLYSIA 470 (manufactured by Fuji Silysia Chemical Ltd.)
   Particle size: 14 µm
   Blended: 0.5 parts by mass

### <Example 14>

The decorative sheet described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows. The coating liquid for the second gloss-adjustment layer was printed so that the second gloss-adjustment layer 6 would have a thickness of 2 µm.

### (Coating Liquid for Second Gloss-adjustment Layer)

- Ionizing radiation-curable resin
   Type: trimethylolpropane EO-modified triacrylate (3 mol EO added)
   Product name: Miramer M3130 (manufactured by Miwon)
   Blended: 100 parts by mass
- Particles
   Product name: SYLYSIA 250N (manufactured by Fuji Silysia Chemical Ltd.)
   Particle size: 5 µm
   Blended: 0.5 parts by mass

### <Comparative Example 1>

The decorative sheet described with reference to Figs. 1 to 4 was produced in the same manner as in Example 1 except for the following modifications.

That is, in this example, the composition of the coating liquid for the second gloss-adjustment layer was changed as follows.

### (Coating Liquid for Second Gloss-adjustment Layer)

- Ionizing radiation-curable resin
   Type: trimethylolpropane EO-modified triacrylate (6 mol EO added)
   Product name: Miramer M3160 (manufactured by Miwon)
   Blended: 100 parts by mass
- Particles
   Product name: SYLYSIA 250N (manufactured by Fuji Silysia Chemical Ltd.)
   Particle size: 5 µm
   Blended: 20 parts by mass

### <Comparative Example 2>

The decorative sheet described with reference to Figs. 1 to 4 was produced in the same manner as in Example 2 except for the following modifications.

That is, in this example, the composition of the coating liquid for the first gloss-adjustment layer was changed as follows. In addition, the first irradiation step was omitted.

### (Coating Liquid for First Gloss-adjustment Layer)

- Thermosetting resin
   Type: aqueous thermosetting resin (polycarbonate-based)
   Product name: Takelac (registered trademark) WS-5100 (manufactured by Mitsui Chemicals, Inc)

### <Comparative Example 3>

The decorative sheet described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows. The coating liquid for the second gloss-adjustment layer was printed so that the second gloss-adjustment layer 6 would have a thickness of 20 µm.

### (Coating Liquid for Second Gloss-adjustment Layer)

- Ionizing radiation-curable resin
   Type: trimethylolpropane EO-modified triacrylate (35 mol EO added)
   Product name: NK Ester ATM-35E (manufactured by Shin-Nakamura Chemical Co., Ltd.)
   Blended: 100 parts by mass
- Particles
   Product name: SYLYSIA 250N (manufactured by Fuji Silysia Chemical Ltd.)
   Particle size: 5 µm
   Blended: 0.5 parts by mass

### <Comparative Example 4>

The decorative sheet described with reference to Figs. 1 to 4 was produced in the same manner as in Example 2 except for the following modifications.

That is, in this example, the coating liquid for the first gloss-adjustment layer contained 50 parts by mass of the ionizing radiation-curable resin and 50 parts by mass of the thermosetting resin on a solid content basis.

In addition, the composition of the coating liquid for the second gloss-adjustment layer was changed as follows. The coating liquid for the second gloss-adjustment layer was printed so that the second gloss-adjustment layer 6 would have a thickness of 1 µm.

### (Coating Liquid for Second Gloss-adjustment Layer)

- Ionizing radiation-curable resin
   Type: trimethylolpropane EO-modified triacrylate (3 mol EO added)
   Product name: Miramer M3130 (manufactured by Miwon)
   Blended: 100 parts by mass
- Particles
   Product name: SYLYSIA 250N (manufactured by Fuji Silysia Chemical Ltd.)
   Particle size: 5 µm
   Blended: 0.5 parts by mass

### <Evaluation>

Each of the above decorative sheets was evaluated as follows. Samples rated as "AAA", "AA", or "A" were deemed acceptable because they would not pose problems in actual use.

### (1) Thickness of Gloss-adjustment Layer

The thickness of the second gloss-adjustment layer was measured in the same manner as described above.

Specifically, the decorative sheet was embedded in a resin such as a cold-curing epoxy resin or a UV curable resin, and the resin was allowed to fully cure. Then, this was cut so that a cross section of the decorative sheet was exposed. The cross section was mechanically polished to obtain a measurement surface.

After that, the cross section of the second gloss-adjustment layer was imaged using a scanning electron microscope SIGMA500, manufactured by Carl Zeiss Microscopy GmbH. The imaging was carried with an acceleration voltage of 0.5 keV (low acceleration voltage), in the SE2 imaging mode, and at 2000x magnification. The measurement samples were not subjected to sputtering.

Next, from this cross-sectional image, the dimension of the second gloss-adjustment layer in the width direction of the ridge portions, and the area of the cross section of the second gloss-adjustment layer were obtained. The thickness of the second gloss-adjustment layer was calculated by dividing this area by the dimension.

The thickness of the first gloss-adjustment layer was measured in the same manner as described above.

### (2) Gloss

Specular gloss GS (60°) was measured as the gloss using micro-gloss 60° xs (manufactured by BYK). The "60° gloss value" in the following Tables 1 to 3 represents this specular gloss GS (60°).

### (3) Designability

Each decorative sheet was visually observed to evaluate them for designability according to the following criteria.
AA: A uniform surface condition was observed.
A: A generally uniform surface condition was observed.
B: A non-uniform surface condition was observed.

### (4) Scratch Resistance

Each decorative sheet was attached to a wood substrate B using a urethane adhesive. After that, a steel wool rubbing test was carried out to evaluate scratch resistance. Specifically, with a load of 100 g imposed, steel wool was reciprocated by rubbing 20 times on the decorative sheet, and scratches and gloss changes caused on the surface of the sheet were visually examined.

The evaluation criteria were as follows.
AAA: No scratches or gloss changes were observed on the surface.
AA: Slight scratches or gloss changes were observed on part of the surface.
A: Slight scratches or gloss changes were observed on the surface.
B: Significant scratches or gloss changes were observed on the surface.

### (5) Stain Resistance

To evaluate the stain resistance, the stain A test specified in the Japanese Agricultural Standards (JAS) was carried out. Specifically, a line having a width of 10 mm was drawn on the surface protective layer of each decorative sheet using blue ink, black quick-drying ink, and red crayon, and the sheets were left to stand for 4 hours. Then, the lines drawn with the blue ink, black quick-drying ink, and red crayon were wiped off with a cloth wetted with ethanol.

The evaluation criteria were as follows.
AA: The colored lines could be easily wiped off.
A: Part of colored lines could be wiped off but part of them remained as stains.
B: None of colored lines could be wiped off.

### (6) Heat Resistance

A steel plate, the decorative sheet, and another steel plate were stacked in this order and pressed at a temperature of 100°C and a pressure of 100 MPa for 20 seconds. After that, the peelability between the steel plates and the surfaces of the decorative sheet was examined. The resin softens and adheres to the steel plates when the surface layers of the decorative sheet have low heat resistance.

The evaluation criteria were as follows.
AAA: The steel plates and the sheet surfaces did not_adhere and could be separated.
AA: The steel plates and the sheet surfaces adhered, but could be separated with a very small force.
A: The steel plates and the sheet surfaces adhered, but could be separated with a small force.
B: The steel plate and the sheet surfaces adhered, and they could not be separated normally, for example, without breaking the sheet.

The ratings are shown in Tables 1 to 3. In Tables 1 to 3, "RA" represents SHIKOH (registered trademark) UV-W300 (manufactured by Mitsubishi Chemical Corporation), which is an aqueous UV-curable resin. "RB" represents Takelac (registered trademark) WS-5100 (manufactured by Mitsui Chemicals, Inc), which is an aqueous thermosetting resin (polycarbonate-based). "RC" represents UW-9102 (manufactured by UBE Corporation), which is an aqueous UV-curable resin. "RD" represents Takelac (registered trademark) WS-4022 (manufactured by Mitsui Chemicals, Inc), which is an aqueous thermosetting resin (polyester-based).

**[Table 1]**

| | | | | Ex. 1 | Ex. 2 | Ex. 3 | Ex. 4 | Ex. 5 | Ex. 6 | Ex. 7 |
|---|---|---|---|---|---|---|---|---|---|---|
| First gloss-adjustment layer | Coating liquid for first gloss-adjustment layer | Ionizing radiation-curable resin | | RA | RA | RA | RA | RA | RA | RC |
| | | Blended amount (parts by mass) | | 100 | 80 | 50 | 20 | 10 | 50 | 50 |
| | | Thermosetting resin | | - | RB | RB | RB | RB | RD | RD |
| | | Blended amount (parts by mass) | | - | 20 | 50 | 80 | 90 | 50 | 50 |
| | Thickness (µm) | | | 5 | 5 | 5 | 5 | 5 | 5 | 5 |
| | 60° gloss value | | | 10 | 10 | 10 | 10 | 10 | 10 | 10 |
| | Surface shape | | | Ridged | Ridged | Ridged | Ridged | Ridged | Ridged | Ridged |
| | Surface roughness | RSm/Ra | | 120 | 120 | 120 | 120 | 120 | 120 | 120 |
| | Acrylic resin | Number of functional groups | | 3 | 3 | 3 | 3 | 3 | 3 | 3 |
| Second gloss-adjustment layer | | Repeating structure | Structure | C2H4O | C2H4O | C2H4O | C2H4O | C2H4O | C2H4O | C2H4O |
| | | | Number of repeat units | 6 | 6 | 6 | 6 | 6 | 6 | 6 |
| | Additive | Particle size (µm) | | 5 | 5 | 5 | 5 | 5 | 5 | 5 |
| | | Added amount | | 0.5 | 0.5 | 0.5 | 0.5 | 0.5 | 0.5 | 0.5 |
| | Thickness (µm) | | | 5 | 5 | 5 | 5 | 5 | 5 | 5 |
| | 60° gloss value | | | 3 | 3 | 3 | 3 | 3 | 3 | 3 |
| Designability | | | | AA | AA | AA | AA | AA | AA | AA |
| Stain resistance | | | | AA | AA | AA | AA | AA | AA | AA |
| Scratch resistance | Steel wool test | | | A | AA | AAA | AAA | AAA | AAA | AAA |
| Heat resistance | Adhesion to hot steel plate | AAA | AAA | AAA | AA | A | AAA | AAA | | |

**[Table 2]**

| | | | | Ex. 8 | Ex. 9 | Ex. 10 | Ex. 11 | Ex. 12 | Ex. 13 | Ex. 14 |
|---|---|---|---|---|---|---|---|---|---|---|
| First gloss-adjustment layer | Coating liquid for first gloss-adjustment layer | Ionizing radiation-curable resin | | RA | RA | RA | RA | RA | RA | RA |
| | | Blended amount (parts by mass) | | 50 | 50 | 50 | 50 | 50 | 50 | 50 |
| | | Thermosetting resin | | RB | RB | RB | RB | RB | RB | RB |
| | | Blended amount (parts by mass) | | 50 | 50 | 50 | 50 | 50 | 50 | 50 |
| | Thickness (µm) | | | 5 | 5 | 1.5 | 22 | 5 | 5 | 5 |
| | 60° gloss value | | | 10 | 10 | 5 | 15 | 10 | 10 | 10 |
| | Surface shape | | | Ridged | Ridged | Ridged | Ridged | Ridged | Ridged | Ridged |
| | Surface roughness | RSm/Ra | | 10 | 450 | 120 | 120 | 120 | 120 | 550 |
| | Acrylic resin | Number of functional groups | | 3 | 3 | 3 | 3 | 3 | 3 | 3 |
| Second gloss-adjustment layer | | Repeating structure | Structure | C2H4O | C2H4O | C2H4O | C2H4O | C3H6O | C2H4O | C2H4O |
| | | | Number of repeat units | 30 | 6 | 6 | 6 | 6 | 6 | 3 |
| | Additive | Particle size (µm) | | 5 | 5 | 5 | 5 | 5 | 14 | 5 |
| | | Added amount | | 0.5 | 0.5 | 0.5 | 0.5 | 0.5 | 0.5 | 0.5 |
| | Thickness (µm) | | | 20 | 3 | 5 | 5 | 5 | 5 | 2 |
| | 60° gloss value | | | 0.8 | 5 | 3 | 3 | 3 | 2 | 8 |
| Designability | | | | AA | AA | AA | A | AA | AA | A |
| Stain resistance | | A | AA | AA | AA | AA | AA | AA | | |
| Scratch resistance | Steel wool test | AAA | AAA | A | AAA | AAA | A | AAA | | |
| Heat resistance | Adhesion to hot steel plate | AAA | AAA | AAA | AAA | AAA | AAA | AAA | | |

**[Table 3]**

| | | | | Comp. Ex. 1 | Comp. Ex. 2 | Comp. Ex. 3 | Comp. Ex. 4 |
|---|---|---|---|---|---|---|---|
| First gloss-adjustment layer | Coating liquid for first gloss-adjustment layer | Ionizing radiation-curable resin | | RA | - | RA | RA |
| | | Blended amount (parts by mass) | | 100 | - | 50 | 50 |
| | | Thermosetting resin | | - | RB | RB | RB |
| | | Blended amount (parts by mass) | | - | 100 | 50 | 50 |
| | Thickness (µm) | | | 5 | 5 | 5 | 5 |
| | 60° gloss value | | | 10 | 10 | 10 | 10 |
| Second gloss-adjustment layer | Surface shape | | | Irregularities formed by particles | Ridged | Ridged | Ridged |
| | Surface roughness | RSm/Ra | | 400 | 120 | 8 | 640 |
| | Acrylic resin | Number of functional groups | | 3 | 3 | 3 | 3 |
| | | Repeating structure | Structure | C2H4O | C2H4O | C2H4O | C2H4O |
| | | | Number of repeat units | 6 | 6 | 35 | 3 |
| | Additive | Particle size (µm) | | 5 | 5 | 5 | 5 |
| | | Added amount | | 20 | 0.5 | 0.5 | 0.5 |
| | Thickness (µm) | | | 5 | 5 | 20 | 1 |
| | 60° gloss value | 10 | 2 | 0.8 | 11 | | |
| Designability | | B | AA | AA | B | | |
| Stain resistance | | AA | AA | B | AA | | |
| Scratch resistance | Steel wool test | B | AAA | AAA | AAA | | |
| Heat resistance | Adhesion to hot steel plate | AAA | B | AAA | AAA | | |

As shown in Tables 1 and 2, the decorative sheets according to Examples 1 to 14 exhibited sufficient performance in all of designability, stain resistance, scratch resistance, and heat resistance. In contrast, as shown in Table 3, the sheet according to Comparative Example 1 exhibited insufficient performance in designability and scratch resistance. The decorative sheet according to Comparative Example 2 exhibited insufficient performance in heat resistance. The decorative sheet according to Comparative Example 3 exhibited insufficient stain resistance. The decorative sheet according to Comparative Example 4 exhibited insufficient designability.

### [Reference Signs List]

- 1: Decorative sheet
- 2: Primary film layer
- 3: Solid ink layer
- 4: Patterned ink layer
- 5: First gloss-adjustment layer
- 6: Second gloss-adjustment layer
- 6A: Core portion
- 6B: Ridge portion
- 11: Decorative material
- B: Substrate
- C: Position
- D: Position

## Claims

1. A decorative sheet comprising a primary film layer and a surface protective layer,
wherein the surface protective layer comprises
a first gloss-adjustment layer provided on the primary film layer and containing a cured product of a first ionizing radiation-curable resin, and
a second gloss-adjustment layer partially covering the upper surface of the first gloss-adjustment layer and containing a cured product of a second ionizing radiation-curable resin, the second gloss-adjustment layer has an upper surface with an uneven structure having a ratio RSm/Ra of a mean width RSm of roughness profile elements to an arithmetic mean roughness Ra that is in the range of 10 or more and 600 or less, and the uneven structure comprises a plurality of ridge portions each protruding in a ridge shape.

2. The decorative sheet according to claim 1, wherein the cured product of the first ionizing radiation-curable resin contains one or more bonds selected from the group consisting of a urethane bond, a carbonate bond, and an amide bond.

3. The decorative sheet according to claim 1 or 2, wherein the first gloss-adjustment layer further contains a cured product of a thermosetting resin.

4. The decorative sheet according to claim 3, wherein the proportion of solid content of the thermosetting resin relative to total solid content of the first ionizing radiation-curable resin and the thermosetting resin is 90% by mass or less.

5. The decorative sheet according to claim 3 or 4, wherein the cured product of the thermosetting resin contains one or more bonds selected from the group consisting of a urethane bond, a carbonate bond, and an amide bond.

6. The decorative sheet according to any one of claims 3 to 5, wherein the thermosetting resin contains one or more of an aqueous urethane dispersion, an aqueous epoxy dispersion, and an aqueous polyamine dispersion.

7. The decorative sheet according to any one of claims 3 to 6, wherein the first ionizing radiation-curable resin is an aqueous dispersion or emulsion containing at least one of a urethane acrylate and a polyurethane resin,
the thermosetting resin is an aqueous dispersion containing a polyurethane resin, and
the polyurethane resin in the thermosetting resin contains a reaction product of a polyisocyanate and a polyol, the polyol containing at least one of a polyester polyol and a polycarbonate polyol.

8. The decorative sheet according to any one of claims 1 to 7, wherein the first and second gloss-adjustment layers each have a thickness in the range of 2 µm or more and 20 µm or less.

9. The decorative sheet according to any one of claims 1 to 8, wherein the second ionizing radiation-curable resin contains a di- or higher functional acrylate having a repeating structure.

10. The decorative sheet according to claim 9, wherein the number of repeat units of the repeating structure is 3 or more.

11. The decorative sheet according to any one of claims 1 to 10, wherein the second gloss-adjustment layer further contains particles with a mean particle size of 10 µm or less.

12. The decorative sheet according to claim 11, wherein the mass of the particles is in the range of 0.5 parts by mass or more and 10 parts by mass or less, relative to 100 parts by mass of the second ionizing radiation-curable resin.

13. A decorative material comprising:
the decorative sheet according to any one of claims 1 to 12; and
a substrate having the decorative sheet attached thereto.

14. A decorative sheet manufacturing method comprising:
forming, on a primary film layer, a first gloss-adjustment layer containing a cured product of a first ionizing radiation-curable resin; and
forming a second gloss-adjustment layer partially covering the upper surface of the first gloss-adjustment layer and containing a cured product of a second ionizing radiation-curable resin, the second gloss-adjustment layer having an upper surface with an uneven structure having a ratio RSm/Ra of a mean width RSm of roughness profile elements to an arithmetic mean roughness Ra that is in the range of 10 or more and 600 or less, the uneven structure comprising a plurality of ridge portions each protruding in a ridge shape.

15. The decorative sheet manufacturing method according to claim 14, wherein the first gloss-adjustment layer further contains a cured product of a thermosetting resin.

16. The decorative sheet manufacturing method according to claim 15, wherein the first ionizing radiation-curable resin is an aqueous dispersion or emulsion containing at least one of a urethane acrylate and a polyurethane resin,
the thermosetting resin is an aqueous dispersion containing a polyurethane resin, and
the polyurethane resin in the thermosetting resin contains a reaction product of a polyisocyanate and a polyol, the polyol containing at least one of a polyester polyol and a polycarbonate polyol.
